# EUROPÄISCHE PATENTANMELDUNG

(11) **EP 3 961 797 A1**
(43) Veröffentlichungstag der Anmeldung: **02.03.2022**
(21) Anmeldenummer: 20192801.7
(22) Anmeldetag: 26.08.2020
(51) Int. Cl.: H01M 50/502, H01M 50/505, H01M 50/51, H01M 50/521, H01M 50/522

(54) **POUCHZELLEN-STACK**

(71) Anmelder: Hilti Aktiengesellschaft, 9494 Schaan (LI)
(72) Erfinder: Kuhlmann, Kevin, 86916 Kaufering (DE)
(74) Vertreter: Hilti Aktiengesellschaft Corporate Intellectual Property

(57) **Zusammenfassung**

Stack mit wenigstens zwei benachbarten Pouchzellen, wobei die Pouchzellen jeweils ausgestattet sind mit einer Plus-Kontaktfahne und einer Minus-Kontaktfahne, über die die Pouchzellen elektrisch kontaktiert und so beladen und entladen werden können, wobei die wenigstens zwei Pouchzellen elektrisch in Reihe geschaltet sind, wobei das Stack wenigstens einen Zellverbinder mit einer Metallverbundschicht aufweist, wobei der Zellverbinder zwischen komplementären Kontaktfahnen der benachbarten Pouchzellen angeordnet und elektrisch mit den komplementären Kontaktfahnen in Reihe geschaltet ist.

## Beschreibung

Die vorliegende Erfindung betrifft ein Stack mit wenigstens zwei benachbarten Pouchzellen. Die Pouchzellen sind jeweils ausgestattet mit einer Plus-Kontaktfahne und einer Minus-Kontaktfahne, über die die Pouchzellen elektrisch kontaktiert und so beladen und entladen werden können, wobei die wenigstens zwei Pouchzellen elektrisch in Reihe geschaltet sind.

Solche Stacks sind grundsätzlich aus dem Stand der Technik bekannt. Bei einer Reihenschaltung von Pouchzellen ist beispielsweise eine Plus-Kontaktfahne einer ersten Pouchzelle mit einer Minus-Kontaktfahne einer zweiten Pouchzelle und eine Plus-Kontaktfahne der zweiten Pouchzelle mit einer Minus-Kontaktfahne einer dritten Pouchzelle verbunden, usw. Die Plus-Kontaktfahne der ersten Pouchzelle und die Minus-Kontaktfahne der zweiten Pouchzelle können als komplementäre (gegenpolige) Kontaktfahnen bezeichnet werden.

Es ist Aufgabe der vorliegenden Erfindung ein Stack zu schaffen, dessen Pouchzellen vergleichsweise sicher kontaktiert sind.

Die Aufgabe wird dadurch gelöst, dass das Stack wenigstens einen Zellverbinder mit einer Metallverbundschicht aufweist, wobei der Zellverbinder zwischen komplementären Kontaktfahnen der benachbarten Pouchzellen angeordnet und elektrisch mit den komplementären Kontaktfahnen in Reihe geschaltet ist.

Dier Erfindung schließt die Erkenntnis ein, dass es beim Kontakt von komplementären Kontaktfahnen, insbesondere wenn die Plus-Kontaktfahne aus Aluminium und die Minus-Kontaktfahne aus Kupfer besteht, zu einer unerwünschten elektrochemischen Korrosion kommen kann, die eine Kontaktsicherheit des Stacks nachteilig beeinflusst. Es wurde ebenfalls erkannt, dass eine stoffschlüssige Verbindung durch Schweißen unmöglich - oder im Zusammenhang mit Stacks - zumindest unpraktikabel ist. Der erfindungsgemäßer Zellverbinder mit Metallverbundschicht schafft eine Grundlage für eine Vermeidung dieser Nachteile.

Es hat sich als vorteilhaft herausgestellt, wenn die Metallverbundschicht in Form eines Aluminium-Kupfer-Bimetalls bereitgestellt ist. In einer besonders bevorzugten Ausgestaltung ist das Aluminium-Kupfer-Bimetall als walzplattierter Verbundwerkstoff bereitgestellt. Das Bimetall kann eine Aluminiumlage und eine Kupferlage aufweisen. In einer besonders bevorzugten Ausgestaltung besteht die Plus-Kontaktfahne aus Aluminium oder weist Aluminium auf.

Es hat sich als vorteilhaft herausgestellt, wenn die Minus-Kontaktfahne aus Kupfer besteht oder Kupfer aufweist. In einer besonders bevorzugten Ausgestaltung ist das Stack derart angeordnet, dass die Plus-Kontaktfahne an einer Aluminiumlage der Metallverbundschicht anliegt und/oder die Minus-Kontaktfahne an einer Kupferlage der Metallverbundschicht anliegt. In einem assemblierten und kontaktierten Stack kann die Plus-Kontaktfahne mit der Aluminiumlage der Metallverbundschicht verschweißt und/oder verpresst sein. Es hat sich als vorteilhaft herausgestellt, wenn in eine, assemblierten und kontaktiertem Stack die Minus-Kontaktfahne mit der Kupferlage der Metallverbundschicht verschweißt und/oder verpresst ist.

An einer Verbindungsfläche von Kupfer und Aluminium kann es grundsätzlich zu einer Interdiffusion kommen. Bei den für Stacks typischen Temperaturen (deutlich unter 100 Grad Celsius) überwiegend die Grenzflächendiffusion - bei der sich typischerweise intermetallische Phasen (Cu₂Al, Cu₃Al₂, CuAI, CuAl₂) ausbilden. In diesem Zusammenhang wurde erkannt, dass durch die walzplattierte Kupfer-Aluminium-Paarung Sauerstoff und/oder Feuchtigkeit von der Grenzfläche ferngehalten werden kann. Somit kann eine Kontaktalterung im Bereich der intermetallischen Phasen - im Vergleich zu einer etwa lediglich gegen einander verschraubten Kupfer-Aluminium-Paarung - vermindert werden. Bei der Paarung zwischen einer aus Kupfer bestehenden Minus-Kontaktfahne und dem Kupfer der walzplattierten Kupfer-Aluminium-Paarung des Zellverbinders kommt es zu keiner nachteiligen elektrochemischen Korrosion. Gleichsam ist die Paarung zwischen einer aus Aluminium bestehenden Plus-Kontaktfahne und dem Aluminium der walzplattierten Kupfer-Aluminium-Paarung des Zellverbinders von Hause aus nicht mit elektrochemischer Korrosion zu rechnen.

In einer besonders bevorzugten Ausgestaltung ist ein elektrischer Strom zwischen den zwei Pouchzellen ausschließlich über den oder die Zellverbinder geführt. In einer besonders bevorzugten Ausgestaltung ist vorgesehen, dass der Zellverbinder unabhängig von seiner Temperatur die komplementären Kontaktfahnen der benachbarten Pouchzellen elektrisch miteinander kontaktiert. Mit anderen Worten wird auch eine als walzplattierte Kupfer-Aluminium-Paarung weitergebildete Metallverbundschicht nicht als temperaturabhängiger, elektrischer Trennschalter oder dergleichen verwendet.

Der Zellverbinder kann aus der Metallverbundschicht bestehen. Es hat sich als vorteilhaft herausgestellt, wenn der Zellverbinder ein von der Plus-Kontaktfahne und/oder ein von der Minus-Kontaktfahne verschiedenes Bauteil ist.

Es hat sich ebenfalls als vorteilhaft herausgestellt, wenn das Stack eine Mehrzahl von Pochzellen und eine Mehrzahl von Zellverbindern aufweist, wobei die Zellverbinder jeweils zwischen komplementären Kontaktfahnen benachbarter Pouchzellen angeordnet und elektrisch mit den komplementären Kontaktfahnen in Reihe geschaltet sind.

Die Erfindung wird ebenfalls gelöst durch die Verwendung einer Metallverbundschicht in Form eines vorzugsweise walzplattierten Aluminium-Kupfer-Bimetalls als temperaturunabhängigen elektrischen Zellverbinder zwischen komplementären Kontaktfahnen benachbarter Pouchzellen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein bevorzugtes Ausführungsbeispiel eines erfindungsgemäßen Stacks; und
- Figur 2: drei Ausführungsbeispiele eines Zellverbinders.

### Ausführungsbeispiele

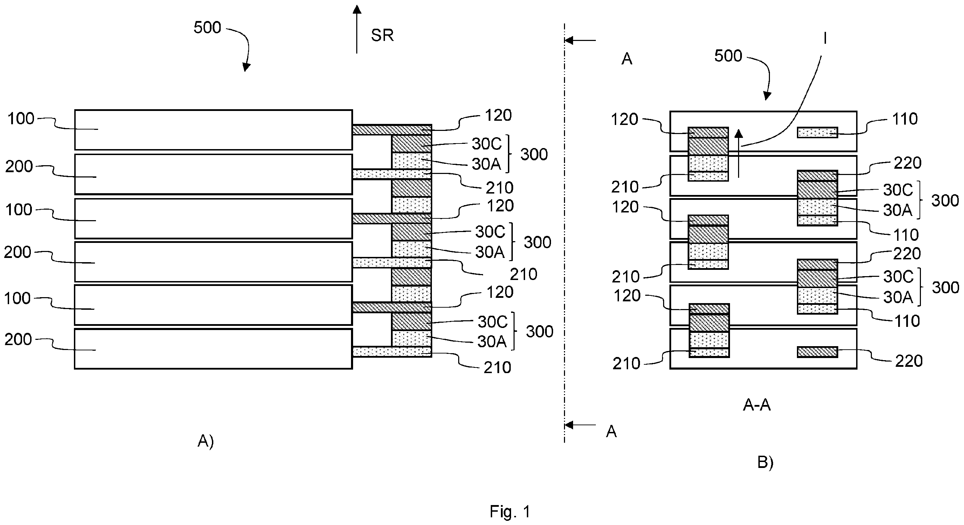

Ein besonders bevorzugtes Ausführungsbeispiel eines erfindungsgemäßen Stacks 500 ist Figur 1 dargestellt. Dabei zeigt Figur 1A eine Seitenansicht des Stacks. Eine Draufsicht (Ansicht A-A in Figur 1B entsprechend der Schnittlinie A-A in Figur 1A) auf den Stack 500 ist in Figur 1B dargestellt. Das Stack 500 ist ausgestattet mit wenigstens zwei benachbarten Pouchzellen 100, 200. Im Ausführungsbeispiel der Figur 1 weist das Stack sechs Pouchzellen 100, 200 auf, die flächig ausgebildet und in Stapelrichtung SR aufgestapelt sind. Im Folgenden wird zwischen ersten Pouchzellen 100 und zweiten Pouchzellen 200 unterschieden, wobei die Begriffe "erste" und "zweite" nicht als Zahlwort oder Mengenangabe verstanden werden sollen, sondern lediglich die um 180 Grad gedrehte Orientierung benachbarter Pouchzellen bezeichnen sollen. So sind die ersten und zweiten Pouchzellen alternierend (um 180 Grad gedreht) aufgestapelt. Eine Plus-Kontaktfahne 110 der ersten Pouchzelle 100 ist - bezogen auf die Stapelrichtung SR - kongruent bzw. überlappend mit der Minus-Kontaktfahne 220 der zweiten Pouchzelle 200. Gleichsam ist eine Minus-Kontaktfahne 120 der ersten Pouchzelle 100 kongruent bzw. überlappend mit einer Plus-Kontaktfahne 210 der zweiten Pouchzelle 200. Die Pouchzellen 100, 200 des Stacks 500 sind in elektrisch in Reihe geschaltet, d.h. die Minus-Kontaktfahne 120 der ersten Pouchzelle 100 ist elektrisch mit der Plus-Kontaktfahne 210 der zweiten Pouchzelle 200 verbunden. Die Minus-Kontaktfahne 220 der zweiten Pouchzelle 200 ist wiederum mit einer Plus-Kontaktfahne 110 der darunterliegenden ersten Pouchzelle 100 verbunden. Die Plus-Kontaktfahnen 110, 210 bestehen jeweils beispielhaft aus Aluminium. Die Minus-Kontaktfahnen 120, 220 bestehen jeweils beispielhaft aus Kupfer.

Das Stack 500 weist fünf Zellverbinder 300 auf, die jeweils mit einer Metallverbundschicht 30A, 30C ausgestattet sind. Im Ausführungsbeispiel der Figur 1 ist die Metallverbundschicht 30A, 30C in Form eines walzplattierten Bimetalls mit einer Aluminiumlage 30A und einer Kupferlage 30C bereitgestellt. Die Zellverbinder 300 sind jeweils zwischen komplementären Kontaktfahnen 120, 210 benachbarter Pouchzellen 100, 200 angeordnet und elektrisch mit den komplementären Kontaktfahnen 120, 210 in Reihe geschaltet. Dabei liegen die Plus-Kontaktfahnen 110, 210 jeweils an einer Aluminiumlage 30A der Metallverbundschicht 30A, 30C an. Die Minus-Kontaktfahnen 120, 220 liegen jeweils an einer Kupferlage 30C der Metallverbundschicht 30A, 30C an. Bei der Paarung zwischen den aus Kupfer bestehenden Minus-Kontaktfahne 120, 220 und den Kupferlagen 30C der walzplattierten Metallverbundschichten 30A, 30C der Zellverbinder 300 kommt es zu keiner nachteiligen elektrochemischen Korrosion. Dies gilt ebenfalls für die Paarung der aus Aluminium bestehenden Plus-Kontaktfahnen 110, 210 und den Aluminiumlagen 30A der der walzplattierten Metallverbundschichten 30A, 30C. Bei der obersten Pouchzelle 100 (bezogen auf die Stapelrichtung SR in Figur 1) bleibt vorzugsweise die Plus-Kontaktfahne 110 frei. Bei der untersten Pouchzelle 100 (bezogen auf die Stapelrichtung SR in Figur 1) bleibt vorzugsweise die Minus-Kontaktfahne 220 frei. Über diese freibleibenden Kontaktfahnen kann der Stack 500 beispielsweise in einen hier nicht gezeigten Akkupack einer elektrischen Handwerkzeugmaschine eingebunden sein.

Wie der Figur 1 entnommen werden kann, wird ein elektrischer Strom I zwischen zwei benachbarten Pouchzellen 100, 200 jeweils ausschließlich über die Zellverbinder 300 geführt. Die Zellverbinder 300 kontaktieren die komplementären Kontaktfahnen 110, 120; 210, 220 der benachbarten Pouchzellen 100, 200 unabhängig von einer Temperatur der Zellverbinder 300 elektrisch dauerhaft miteinander.

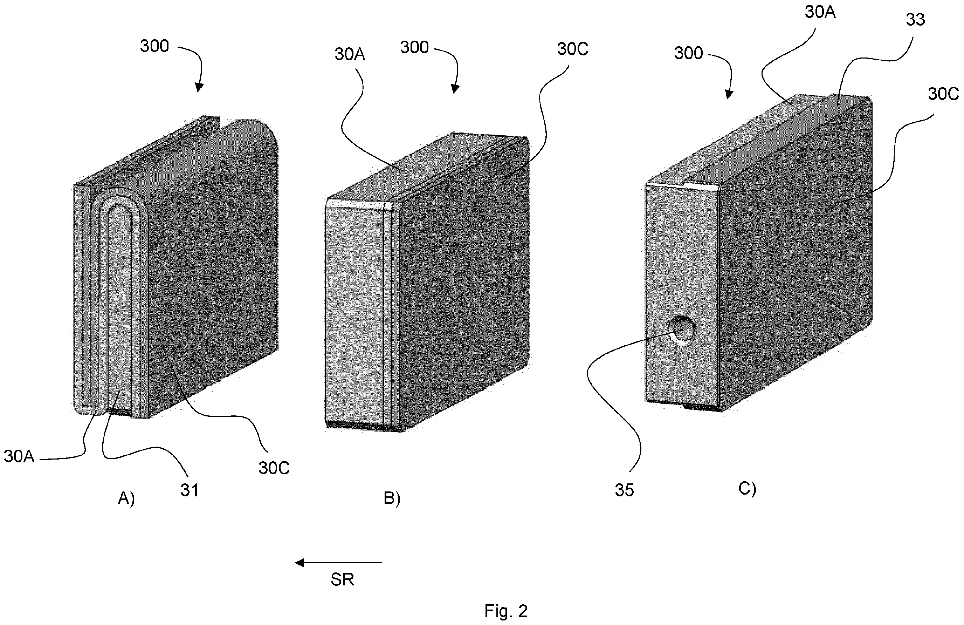

Drei bevorzuge Ausführungsbeispiele eines Zellverbinders 300 werden nun mit Bezug auf Figur 2 genauer erläutert. Allen Ausführungsbeispielen ist gemein, dass der Zellverbinder 300 eine Metallverbundschicht 30A, 30C aufweist, insbesondere aus der Metallverbundschicht 30A, 30C besteht. Die Metallverbundschicht 30A, 30C ist in Form eines walzplattierten Bimetalls mit, insbesondere bestehend aus einer Aluminiumlage 30A und einer Kupferlage 30C bereitgestellt. Im Ausführungsbeispiel der Figur 2A ist die Metallverbundschicht 30A, 30C in Stapelrichtung SR mäandrisch gefaltet. Der Grund hierfür ist, um eine effektive Kontaktfläche zwischen der Aluminiumlage 30A und der Kupferlage 30C zu vergrößern und so einen etwaig auf Grund einer intermetallischen Phase vergrößerten elektrischen Widerstand zu kompensieren. Um eine elektrische Überbrückung in der Aluminiumlage 30A zu verhindern, ist quer zur Stapelrichtung SR ein Isolator 31 in die mäandrisch gefaltete Metallverbundschicht 30A, 30C eingebracht.

Im Ausführungsbeispiel der Figur 2B sind die Aluminiumlage 30A und die Kupferlage 30C - bezogen auf die Stapelrichtung SR - flächengleich kongruent. Die Aluminiumlage 30A ist hingegen - ebenfalls bezogen auf die Stapelrichtung SR - um ein Mehrfaches dicker als die Kupferlage 30C. Dies insbesondere aus Gründen der Materialersparnis des vergleichsweise teureren Kupfers. Eine intermetallische Phase bildet sich auch hier an der Grenzfläche zwischen Aluminiumlage 30A der Kupferlage 30C aus.

Im Unterschied zum Ausführungsbeispiel der Figur 2B ist beim Ausführungsbeispiel der Figur 2C die Kupferlage 30C in Stapelrichtung SR entlang der Aluminiumlage 30A abgewickelt, so dass zumindest an zwei Seiten der Aluminiumlage 30A eine Krempe 33 ausgebildet ist. Eine quer zur Stapelrichtung SR in die Aluminiumlage 30A eingebrachte Bohrung 35 dient dem Fixieren des Zellverbinders 300 relativ zum hier nicht dargestellten Stack.

### Bezugszeichenliste

- 30A: Aluminiumlage
- 30C: Kupferlage
- 31: Isolator
- 33: Krempe
- 35: Bohrung
- 100: erste Pouchzelle
- 110: Plus-Kontaktfahne
- 120: Minus-Kontaktfahne
- 200: zweite Pouchzelle
- 210: Plus-Kontaktfahne
- 220: Minus-Kontaktfahne

- 300: Zellverbinder

- I: Strom
- SR: Stapelrichtung

## Patentansprüche

1. Stack (500) mit wenigstens zwei benachbarten Pouchzellen (100, 200), wobei die Pouchzellen (100, 200) jeweils ausgestattet sind mit einer Plus-Kontaktfahne (110, 210) und einer Minus-Kontaktfahne (120, 220), über die die Pouchzellen (100, 200) elektrisch kontaktiert und so beladen und entladen werden können, wobei die wenigstens zwei Pouchzellen (100, 200) elektrisch in Reihe geschaltet sind,
**dadurch gekennzeichnet, dass** das Stack (500) wenigstens einen Zellverbinder (300) mit einer Metallverbundschicht (30A, 30C) aufweist, wobei der Zellverbinder (300) zwischen komplementären Kontaktfahnen (120, 210) der benachbarten Pouchzellen (100, 200) angeordnet und elektrisch mit den komplementären Kontaktfahnen (120, 210) in Reihe geschaltet ist.

2. Stack (500) nach Anspruch 1,
**dadurch gekennzeichnet, dass** die Metallverbundschicht (30A, 30C) in Form eines vorzugsweise walzplattierten Aluminium-Kupfer-Bimetalls bereitgestellt ist.

3. Stack (500) nach Anspruch 2,
**dadurch gekennzeichnet, dass** die Plus-Kontaktfahne (110, 210) aus Aluminium besteht und/oder Aluminium aufweist und/oder, dass die Minus-Kontaktfahne (120, 220) aus Kupfer besteht oder Kupfer aufweist (100).

4. Stack (500) nach Anspruch 3,
**dadurch gekennzeichnet, dass** die Plus-Kontaktfahne (110, 210) an einer Aluminiumlage 30A der Metallverbundschicht (30A, 30C) anliegt und/oder die Minus-Kontaktfahne (120, 220) an einer Kupferlage (30C) der Metallverbundschicht (30A, 30C) anliegt.

5. Stack (500) nach einem der vorangehenden Ansprüche,
**dadurch gekennzeichnet, dass** ein elektrischer Strom (I) zwischen den zwei Pouchzellen (100, 200) ausschließlich über den oder die Zellverbinder (300) geführt ist.

6. Stack (500) nach einem der vorangehenden Ansprüche,
**dadurch gekennzeichnet, dass** die Metallverbundschicht (30A, 30C) mäandrisch gefaltet ist.

7. Stack (500) nach einem der vorangehenden Ansprüche,
**dadurch gekennzeichnet, dass** der Zellverbinder (300) ein von der Plus-Kontaktfahne (110, 210) und/oder ein von der Minus-Kontaktfahne (120, 220) verschiedenes Bauteil ist.

8. Stack (500) nach einem der vorangehenden Ansprüche,
**dadurch gekennzeichnet, dass** der Zellverbinder (300) unabhängig von seiner Temperatur die komplementären Kontaktfahnen (110, 120; 210, 220) der benachbarten Pouchzellen (100, 200) elektrisch miteinander kontaktiert.

9. Stack (500) nach einem der vorangehenden Ansprüche,
**dadurch gekennzeichnet, dass** das Stack (500) eine Mehrzahl von Pochzellen (100, 200) und eine Mehrzahl von Zellverbindern (300) aufweist, wobei die Zellverbinder (300) jeweils zwischen komplementären Kontaktfahnen (120, 210) benachbarter Pouchzellen (100, 200) angeordnet und elektrisch mit komplementären Kontaktfahnen (120, 210) in Reihe geschaltet sind.

10. Verwendung einer Metallverbundschicht in Form eines vorzugsweise walzplattierten Aluminium-Kupfer-Bimetalls als temperaturunabhängigen elektrischen Zellverbinder zwischen komplementären Kontaktfahnen benachbarter Pouchzellen.
